# EUROPÄISCHE PATENTSCHRIFT

(11) **EP 3 159 290 B1**
(45) Veröffentlichungstag und Bekanntmachung des Hinweises auf die Patenterteilung: **20.06.2018**
(21) Anmeldenummer: 16450016.7
(22) Anmeldetag: 14.07.2016
(51) Int. Cl.: B65H 19/26

(54) **REISSBAND AUS PAPIER ZUM AUFTRENNEN EINER PAPIERBAHN**
RICE TAPE MADE OF PAPER FOR SEPARATING A SHEET OF PAPER
BANDE DE DECHIRURE EN PAPIER DESTINEE A SEPARER UNE BANDE DE PAPIER EN DEUX

(30) Priorität: 22.10.2015 AT 6902015
(43) Veröffentlichungstag der Anmeldung: 26.04.2017
(73) Patentinhaber: Bartelmuss, Klaus, 8833 Teufenbach (AT)
(72) Erfinder: Bartelmuss, Klaus, 8833 Teufenbach (AT)
(74) Vertreter: Beer & Partner Patentanwälte KG

(56) Entgegenhaltungen:
- EP-A1- 2 868 605
- WO-A1-2004/026743
- US-A- 4 414 258
- US-B2- 7 794 816

## Beschreibung

Die gegenständliche Erfindung betrifft ein aus Papier bestehendes Reißband zum Auftrennen einer sich von einer Anlage zur Erzeugung von Papier her bewegenden Papierbahn, welche auf Trommeln aufgewickelt wird, um hierdurch deren Aufwicklung auf eine leere Trommel zu ermöglichen, wobei das Reißband aus einem Papierband besteht, welches mit zwei längsverlaufenden seitlichen Falzen ausgebildet ist, längs welcher es übereinander gefaltet ist, und wobei der mittlere Bandteil gegenüber den seitlichen Bandteilen zumindest die 1,5fache Dicke aufweist und dessen Breite zumindest ein Fünftel der Breite des Papierbandes aufweist und weiters die Breiten der seitlichen Bandteile jeweils zumindest ein Zehntel der Breite des mittleren Bandteiles aufweisen.

Aus der EP 2868605 A1 ist ein Reißband bekannt, welches zwei seitliche Bandteile aufweist, mittels welcher es in einem Führungskanal von einer Seite derjenigen Papierbahn, welche aufgetrennt werden soll, zur anderen Seite geführt wird. Weiters weist es einen mittleren Bandteil auf, durch welchen die Reißfunktion erfüllt wird. Um dieses Reißband aus dem Führungskanal herausziehen zu können, sind die beiden seitlichen Bandteile gegenüber dem mittleren Bandteil mit einer wesentlich geringeren Dicke ausgebildet. Hierdurch ist dieses Reißband hinreichend elastisch, um es aus dem Führungskanal ohne Beschädigungen herausziehen zu können. Der mittlere Bandteil ist mit Einlagen oder Auflagen versehen, welche aus Papierschnüren, mehreren Lagen von Papierstreifen oder Papierstreifen mit einer großen Dicke bestehen.

Betreffend die Wirkungsweise dieses Reißbandes wird auf die Erläuterungen in der EP 2868605 A1 verwiesen.

Durch ein derartiges Reißband wird den Erfordernissen auf Elastizität der seitlichen Bereiche einerseits, um Beschädigungen durch das Herausziehen des Reißbandes aus dem Führungskanal zu vermeiden, und auf hohe Reißfestigkeit andererseits vollständig entsprochen. Ein Nachteil dieses bekannten Reißbandes besteht jedoch darin, dass die Papierschnüre bei der Wiederverwertung der durch den Trennvorgang von Papierbahnen anfallenden Reste der Papierbahn, in welchen sich das Reißband befindet, nur schwer auflösbar sind. Ein weiterer Nachteil besteht darin, dass bei der Herstellung dieses Reißbandes die in dessen mittlerem Bereich befindlichen Auflagen bzw. Einlagen auf ein Papierband aufgebracht, in einer mittleren Lage gehalten und am Papierband befestigt werden müssen, wodurch bei der Herstellung ein sehr großer Aufwand bedingt wird.

Aus der US 7794816 B2 ist weiters ein Reißband bekannt, welches mit zwei längsverlaufenden seitlichen Falzen ausgebildet ist, längs welcher es übereinander gefaltet ist, wobei der mittlere Bandteil gegenüber den seitlichen Bandteilen etwa die 1,5-fache Dicke aufweist und dessen Breite etwa drei Fünftel der Breite des Reißbandes aufweist und die Breiten der seitlichen Bandteile jeweils etwa ein Fünftel der Breite des Reißbandes aufweisen.

Da bei diesem Reißband die Kanten durch Falze gebildet sind, ist der Einreißwiderstand gegenüber einer geschnittenen Papierkante wesentlich erhöht. Dieses Reißband ist jedoch in seinem mittleren Bereich nur dreilagig ausgebildet, wodurch es für den Trennvorgang eine zu geringe Zugfestigkeit aufweist. Aus diesem Grund besteht das Erfordernis, das Reißband aus einem relativ dicken Papierband herzustellen. Bei einem dicken Papierband sind jedoch die seitlichen Bandteile nicht hinreichend elastisch, um Beschädigungen beim Herausziehen des Reißbandes aus dem Führungskanal auszuschließen. Zudem weist der mittlere Bandteil aufgrund der geschnittenen Kanten eine nur geringe Einreißfestigkeit auf.

Der gegenständlichen Erfindung liegt die Aufgabe zugrunde, die den bekannten Reißbändern anhaftenden Nachteile zu vermeiden. Dies wird erfindungsgemäß dadurch erzielt, dass zudem der mittlere Bandteil mit zumindest einem Falz ausgebildet ist, wodurch er zumindest vierlagig ausgebildet ist.

Vorzugsweise ist der mittlere Bandteil mit mindestens zwei längs verlaufenden Falzen ausgebildet, längs welcher das Papierband nochmals gefaltet ist, wodurch das Reißband in seinem mittleren Bereich zumindest fünflagig ist. Gemäß einer weiteren bevorzugten Ausführungsform ist der mittlere Bandteil mit drei weiteren längs verlaufenden Falzen ausgebildet, längs welchen das Papierband nochmals gefaltet ist, wodurch das Reißband in seinem mittleren Bereich zumindest sechslagig ist.

Vorzugsweise sind bei einem erfindungsgemäßen Reißband dessen übereinander gefalteten Bandteile teilweise oder vollständig miteinander verklebt. Gemäß einem weiteren bevorzugten Merkmal ist ein erfindungsgemäßes Reißband aus einem Kraftpapier hergestellt.

Ein erfindungsgemäßes Reißband ist nachstehend anhand von in der Zeichnung dargestellten Ausführungsbeispielen näher erläutert. Es zeigen:

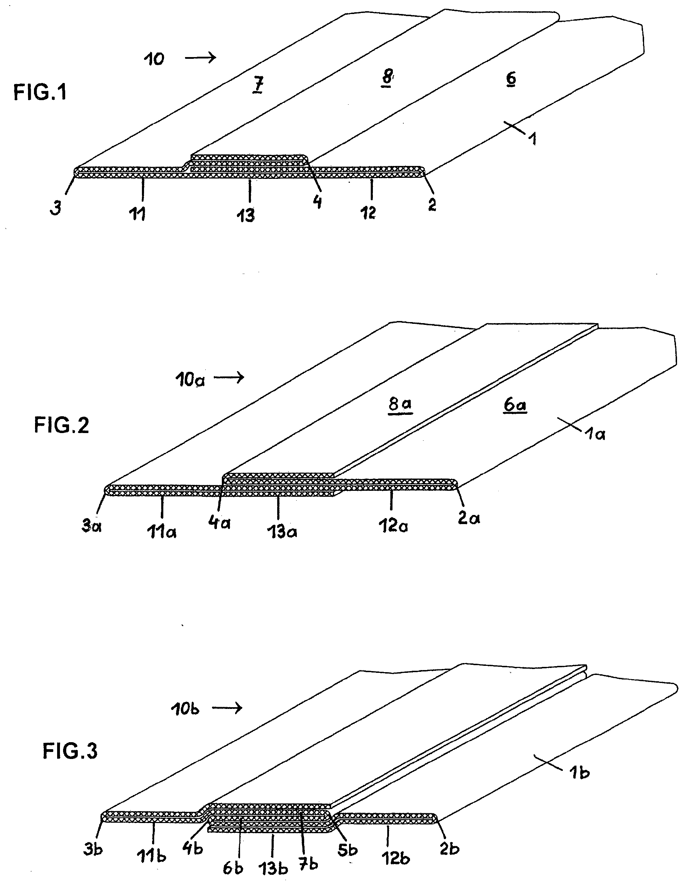

- FIG.1 bis FIG.8: acht Ausführungsbeispiele eines erfindungsgemäßen Reißbandes, jeweils in axonometrischer Darstellung.

In FIG.1 ist ein Reißband 10 dargestellt, welches aus einem Papierband 1 hergestellt ist und welches mit zwei längsverlaufenden Falzen 2 und 3 ausgebildet ist, längs welcher es aufeinandergefaltet ist. Vom Falz 2 weg erstreckt sich ein Bereich 6 des Papierbandes 1 über den mittleren Bereich 13 des Reißbandes 10. Vom Falz 3 weg erstreckt sich ein Bereich 7 des Papierbandes 1 gleichfalls über den mittleren Bereich 13 des Reißbandes 10, wobei im mittleren Bereich eine Überlappung der beiden Randbereiche 6 und 7 erfolgt. Der Bereich 7 ist mit einem weiteren Falz 4 ausgebildet, längs dessen ein seitlicher Bereich 8 des Papierbandes 1 wiederum umgefaltet ist. Die beiden seitlichen Bereiche 11 und 12 des Reißbandes 10 sind zweilagig und der mittlere Bereich 13 des Reißbandes 10 ist vierlagig.

Die Breiten der seitlichen Bereiche 11 und 12 sowie des mittleren Bereiches 13 des Reißbandes 10 betragen jeweils etwa ein Drittel von dessen Breite.

In FIG.2 ist ein Reißband 10a dargestellt, welches aus einem Papierband 1a hergestellt ist und welches gleichfalls mit zwei längsverlaufenden Falzen 2a und 3a ausgebildet ist, wobei die äußeren Bereiche auf jeweils eine der beiden Seiten des Reißbandes 10a umgefaltet sind. Der seitlich außerhalb des Falzes 3a befindliche Bereich 11a des Papierbandes 1a erstreckt sich in den mittleren Bereich 13a des Reißbandes 10a hinein. Der seitlich außerhalb des Falzes 2a befindliche Bereich 6a, der gleichfalls umgefaltet ist, erstreckt sich gleichfalls in den mittleren Bereich 13a des Reißbandes 10a hinein und ist mit einem weiteren Falz 4a ausgebildet, längs dessen er umgefaltet ist. Hierdurch befindet sich ein Randbereich 8a des Papierbandes 1a im mittleren Bereich 13a des Reißbandes 10a.

Die seitlichen Bereiche 11a und 12a des Reißbandes 10a sind zweilagig und dessen mittlerer Bereich 13a ist vierlagig. Die Breiten der seitlichen Bereiche 11a und 12a sowie des mittleren Bereiches 13a des Reißbandes 10a betragen jeweils etwa ein Drittel von dessen Breite.

In FIG.3 ist ein Reißband 10b dargestellt, welches aus einem Papierband 1b hergestellt ist, das mit zwei längsverlaufenden Falzen 2b und 3b versehen ist, längs welcher die seitlichen Bereiche des Papierbandes 1b auf die untere Seite und die obere Seite des Reißbandes 10b umgefaltet sind. Hierdurch sind die beiden seitlichen Bereiche 11b und 12b des Reißbandes 1b zweilagig.

Im mittleren Bereich 13b des Reißbandes 10b sind zwei weitere längsverlaufende Falze 4b und 5b vorgesehen, längs welcher das Papierband 1b nochmals umgefaltet ist, wodurch zwei Bereiche 6b und 7b gebildet sind, welche sich im mittleren Bereich 13b des Reißbandes 10b befinden. Somit befinden sich im mittleren Bereich 13b des Reißbandes 10b drei weitere Lagen, wodurch es in seinem mittleren Bereich 13b fünflagig ist.

Die Breiten der seitlichen Bereiche 11b und 12b sowie des mittleren Bereiches 13b des Reißbandes 10b betragen jeweils etwa ein Drittel von dessen Breite.

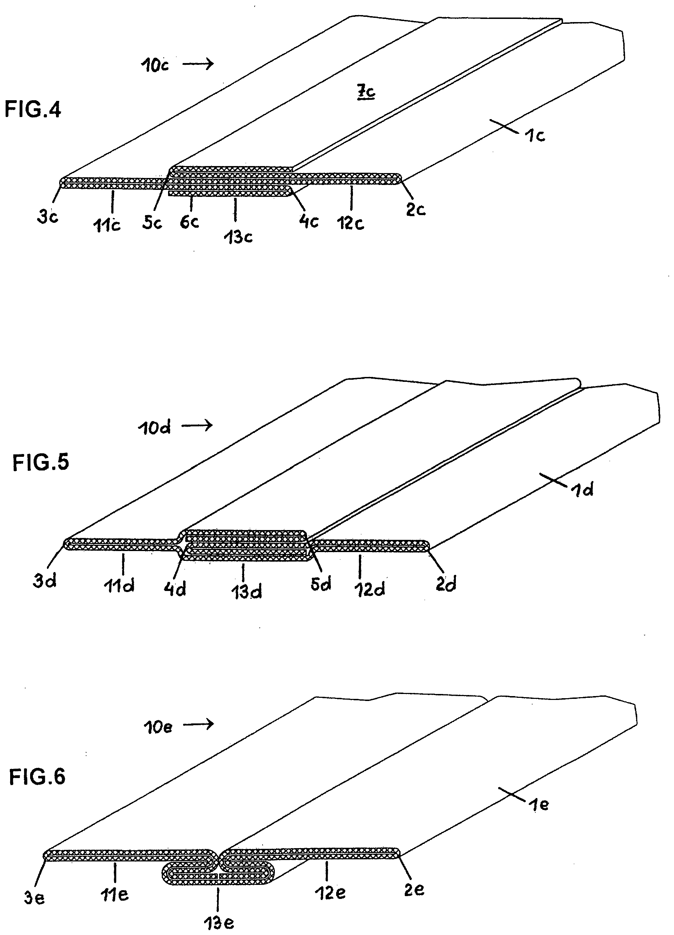

In FIG.4 ist ein Reißband 10c dargestellt, welches aus einem Papierband 1c hergestellt ist, das gleichfalls mit zwei längsverlaufenden Falzen 2c und 3c ausgebildet ist, längs welcher es auf beide Seiten des Reißbandes 10c umgefaltet ist. Hierbei sind die beiden seitlichen Bereiche 11c und 12c des Reißbandes 10c zweilagig. Zudem ist es mit zwei weiteren längsverlaufenden Falzen 4c und 5c ausgebildet, längs welcher die beiden seitlichen Bereiche des Papierbandes 1c jeweils umgefaltet sind, wodurch Bereiche 6c und 7c gebildet sind, welche sich im mittleren Bereich 13c des Reißbandes 10c befinden. Hierdurch ist der mittlere Bereich 13c des Reißbandes 10c fünflagig.

Die Breiten der seitlichen Bereiche 11c und 12c sowie des mittleren Bereiches 13c des Reißbandes 10c betragen jeweils etwa ein Drittel von dessen Breite.

In Fig.5 ist ein Reißband 10d dargestellt, welches aus einem Papierband 1d hergestellt ist, das mit zwei längsverlaufenden Falzen 2d und 3d ausgebildet ist, längs welcher es umgefaltet ist. Hierbei sind die beiden seitlichen Bereiche 11d und 12d des Reißbandes 1d zweilagig. In seinen seitlichen Bereichen ist das Papierband 1d mit zwei weiteren Falzen 4d und 5d ausgebildet, längs welcher es gleichfalls umgefaltet ist. Hierdurch ist der mittlere Bereich 13d des Reißbandes 1 fünflagig.

Die Breiten der seitlichen Bereiche 11d und 12d sowie des mittleren Bereiches 13d des Reißbandes 10d betragen jeweils etwa ein Drittel von dessen Breite.

In FIG.6 ist ein Reißband 10e dargestellt, welches aus einem Papierband 1e hergestellt ist, das gleichfalls mit zwei längsverlaufenden Falzen 2e und 3e ausgebildet ist, wodurch die seitlichen Bereiche 11e und 12e des Reißbandes 10e zweilagig sind. Der mittlere Bereich 13e des Reißbandes 10e ist mit mehreren längsverlaufenden Falzen ausgebildet, längs welcher es mehrfach aufeinandergefaltet ist. Hierdurch ist mittlere Bereich 13e des Reißbandes 10e sechslagig.

Die Breiten der seitlichen Bereiche 11e und 12e sowie des mittleren Bereiches 13e des Reißbandes 10e betragen jeweils etwa ein Drittel von dessen Breite.

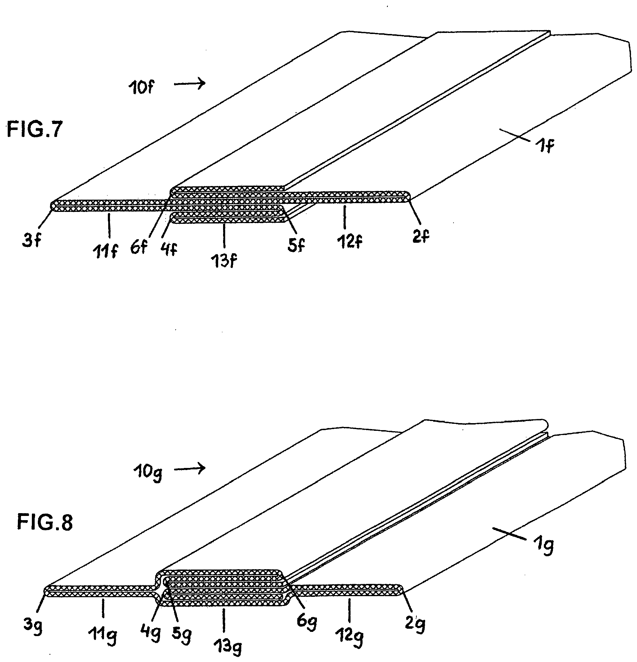

In FIG.7 ist ein Reißband 10f dargestellt, welches aus einem Papierband 1f hergestellt ist, das gleichfalls mit zwei längsverlaufenden Falzen 2f und 3f ausgebildet ist, längs welcher es umgefaltet ist. Hierbei sind die seitlichen Bereiche 11f und 12f des Reißbandes 10f zweilagig. Zudem ist das Reißband 10f mit längsverlaufenden Falzen 4f, 5f und 6f ausgebildet, längs welcher es jeweils umgefaltet ist, wodurch das Reißband 10f in seinem mittleren Bereich 13f sechslagig ist.

Die Breiten der seitlichen Bereiche 11f und 12f sowie des mittleren Bereiches 13f des Reißbandes 10f betragen jeweils etwa ein Drittel von dessen Breite.

In FIG.8 ist ein Reißband 10g dargestellt, welches aus einem Papierband 1g hergestellt ist, das mit längsverlaufenden Falzen 2g und 3g ausgebildet ist, längs welcher es umgefaltet ist. Hierbei ist das Reißband 10g in den beiden seitlichen Bereichen 11g und 12g zweilagig. Zudem ist das Papierband 1g mit weiteren Falzen 4g, 5g und 6g ausgebildet, längs welcher es umgefaltet ist, wodurch das Reißband 10g in seinem mittleren Bereich 13g sechslagig ist.

Die Breiten der seitlichen Bereiche 11g und 12g sowie des mittleren Bereiches 13g des Reißbandes 10g betragen jeweils etwa ein Drittel von dessen Breite.

Die Ausführungsformen der FIG.3 bis FIG. 8 sind gegenüber den Ausführungsformen der FIG.1 und FIG.2 deshalb vorteilhaft, da sie in den mittleren Bereichen 13b, 13c, 14d, 13e, 13f, 13g des Reißbandes 10b, 10c, 10d, 10e, 10f, 10g längs beider Ränder an der Oberseite bzw. an der Unterseite des Reißbandes mit Falzen ausgebildet sind, wodurch in den mittleren Bereichen eine hohe Einreißfestigkeit gewährleistet wird.

Für ein erfindungsgemäßes Reißband ist es maßgeblich, dass es aus einem einzigen Papierband besteht, welches mit mindestens drei längsverlaufenden Falzen ausgebildet ist, längs welcher es so aufeinandergefaltet ist, dass es zwei seitliche Bereiche und einen mittleren Bereich aufweist, wobei die seitlichen Bereiche geringere Dicken als der mittlere Bereich aufweisen bzw. der mittlere Bereich gegenüber den beiden seitlichen Bereichen eine mindestens 1,5-fache Dicke aufweist. Die seitlichen Bereiche des Reißbandes sind zweilagig und der mittlere Bereich ist zumindest vierlagig.

Die seitlichen Bereiche weisen jeweils eine Breite von einem Zehntel bis einem Drittel der Breite des Reißbandes auf. Der mittlere Bereich des Reißbandes weist eine Breite von acht Zehntel bis einem Drittel der Breite des Reißbandes auf. Vorzugsweise weisen die Breiten der seitlichen Bereiche und des mittleren Bereiches des Reißbandes jeweils etwa ein Drittel von dessen Breite auf. Da die seitlichen Kanten und auch der mittlere Bereich des Reißbandes mit Falzen ausgebildet sind, weist dieses Reißband sowohl an den seitlichen Rändern als auch im mittleren Bereich eine hohe Einreißfestigkeit auf. Aufgrund dessen, dass der mittlere Bereich zumindest vierlagig ist, weist dieses Reißband zudem eine sehr hohe Zugfestigkeit auf.

Die einzelnen Lagen können miteinander teilweise oder vollständig verklebt sein. Insbesondere können die im mittleren Bereich des Reißbandes befindlichen Lagen miteinander verklebt sein. Als Klebstoffe können Dispersionsklebstoffe auf der Basis von Polyvinylacetat (PVA) verwendet werden.

Für die Herstellung eines derartigen Reißbandes können Papiere mit höchster Festigkeit, welche als Kraftpapiere bezeichnet sind, verwendet werden, welche ein Flächengewicht von 70 g/m² bis 250 g/m² und eine Längsdehnung von 2 % bis 15 % aufweisen. Kraftpapiere bestehen nahezu vollständig aus Zellstofffasern von langfaserigen Nadelhölzern.

Zur Herstellung eines derartigen Reißbandes erfolgt in einem ersten Verfahrensschritt entlang von längsverlaufenden Falzen eine Umfaltung von ersten Bereichen eines Papierbandes, welche sich im mittleren Bereich des Reißbandes überlappen, und eine nachfolgende Pressung. Hierauf erfolgen entlang mindestens zweier weiterer längsverlaufender Falze weitere Umfaltungen mindestens zweier weiterer Bereiche des Papierbandes.

In denjenigen Bereichen, in welchen eine Verklebung erfolgen soll, wird auf das Papierband vor dem Faltvorgang ein Klebstoff aufgetragen.

## Patentansprüche

1. Aus Papier bestehendes Reißband (10; 10a) zum Auftrennen einer sich von einer Anlage zur Erzeugung von Papier her bewegenden Papierbahn, welche auf Trommeln aufgewickelt wird, um hierdurch deren Aufwicklung auf eine leere Trommel zu ermöglichen, wobei das Reißband (10; 10a) aus einem Papierband (1; 1a) besteht, welches mit zwei längaverlaufenden seitlichen Falzen (2, 3; 2a, 3a) ausgebildet ist, längs welcher es übereinander gefaltet ist, wobei der mittlere Bandteil (13; 13a) gegenüber den seitlichen Bandteilen (11, 12; 11a, 12a) zumindest die 1,5fache Dicke aufweist, und dessen Breite zumindest ein Fünftel der Breite des Papierbandes (1; 1a) aufweist und die Breiten der seitlichen Bandteile (11, 12; 11a, 12a) jeweils zumindest ein Zehntel der Breite des mittleren Bandteiles (13; 13a) aufweisen, **dadurch gekennzeichnet, dass** zudem der mittlere Bandteil (13; 13a) mit zumindest einem Falz (4; 4a) ausgebildet ist, wodurch er zumindest vierlagig ausgebildet ist. (FIG.1, FIG.2)

2. Reißband (10b; 10c; 10d) nach Anspruch 1, **dadurch gekennzeichnet, dass** der mittlere Bandteile (13b, 13c, 13d) mit mindestens zwei längs verlaufenden Falzen (4b, 5b; 4c, 5c; 4d, 5d) ausgebildet ist, längs welcher das Papierband nochmals gefaltet ist, wodurch das Reißband (10b, 10c, 10d) in seinem mittleren Bereich (13b, 13c, 13d) zumindest fünflagig ist. (FIG.3, FIG.4, Fig.5)

3. Reißband (10e 10f; 10g) nach Anspruch 2, **dadurch gekennzeichnet, dass** der mittlere Bandteil (13e, 13f, 13g) mit drei weiteren längs verlaufenden Falzen (4e, 5e, 6e; 4f, 5f, 6f; 4g, 5g, 6g) ausgebildet ist, längs welchen das Papierband (1e 1f, 1g) nochmals gefaltet ist, wodurch das Reißband (10e 10f, 10g) in seinem mittleren Bereich zumindest sechslagig ist. (FIG.6, FIG.7, FIG.8)

4. Reißband (10a; 10b; 10c; 10d; 10e; 10f; 10g) nach einem der Ansprüche 1 bis 3, **dadurch gekennzeichnet, dass** dessen übereinander gefalteten Bandteile, insbesondere im mittleren Bandteil, teilweise oder vollständig miteinander verklebt sind.

5. Reißband (10a; 10b; 10c; 10d; 10e; 10f; 10g) nach einem der Ansprüche 1 bis 4, **dadurch gekennzeichnet, dass** es aus einem Kraftpapier hergestellt ist.

## Claims

1. Tearing strip (10; 10a) made of paper, for severing a paper web which moves from a plant for producing paper and which is wound onto drums, so as to hereby enable winding of the paper web onto an empty drum, wherein the tearing strip (10; 10a) is made of a paper strip (1; 1a), which is configured with two longitudinally running lateral folds (2, 3; 2a, 3a), along which the paper strip is folded on top of itself, wherein the central strip part (13; 13a) has a thickness at least 1.5 times greater than that of the lateral strip parts (11, 12; 11a, 12a), and the width of said central strip part is at least one fifth of the width of the paper strip (1; 1a), and the widths of the lateral strip parts (11, 12; 11a, 12a) are each at least one tenth of the width of the central strip part (13; 13a), **characterised in that** additionally the central strip part (13; 13a) is configured with at least one fold (4; 4a), whereby said central strip part is configured in at least four layers. (FIG. 1, FIG. 2)

2. Tearing strip (10b; 10c; 10d) according to claim 1, **characterised in that** the central strip part (13b, 13c, 13d) is configured with at least two longitudinally running folds (4b, 5b; 4c, 5c; 4d, 5d), along which the paper strip is again folded, whereby the tearing strip (10b, 10c, 10d) has at least five layers in its central region (13b, 13c, 13d). (FIG. 3, FIG. 4, FIG. 5).

3. Tearing strip (10e; 10f; 10g) according to claim 2, **characterised in that** the central strip part (13e, 13f, 13g) is configured with three further longitudinally running folds (4e, 5e, 6e; 4f, 5f, 6f; 4g, 5g, 6g), along which the paper strip (1e, 1f, 1g) is again folded, whereby the tearing strip (10e, 10f, 10g) has at least six layers in its central region. (FIG. 6, FIG. 7, FIG. 8)

4. Tearing strip (10a; 10b; 10c; 10d; 10e; 10f; 10g) according to any one of claims 1 to 3, **characterised in that** the strip parts thereof folded one over the other, in particular in the central strip part, are adhesively bonded to one another partially or entirely.

5. Tearing strip (10a; 10b; 10c; 10d; 10e; 10f; 10g) according to any one of claims 1 to 4, **characterised in that** said tearing strip is produced from a kraft paper.

## Revendications

1. Bande déchirable (10 ; 10a) faite de papier, pour couper un lé de papier qui se déplace en sortant d'une installation de production de papier et qui est enroulé sur des tambours afin qu'il puisse ainsi être enroulé sur un tambour vide, laquelle bande déchirable (10 ; 10a) se compose d'une bande de papier (1 ; 1a) munie de deux pliures latérales longitudinales (2, 3 ; 2a, 3a) le long desquelles elle est repliée, la partie centrale de la bande (13 ; 13a) ayant au moins 1,5 fois l'épaisseur des parties de bande latérales (11, 12 ; 11a, 12a) et sa largeur représentant au moins un cinquième de celle de la bande de papier (1 ; 1a) et la largeur des parties de bande latérales (11, 12 ; 11a, 12a) étant d'au moins un dixième de celle de la partie médiane de la bande (13 ; 13a), **caractérisée en ce que** la partie médiane de la bande (13 ; 13a) est munie en outre d'au moins une pliure (4 ; 4a) de sorte qu'elle est composée d'au moins quatre épaisseurs. (Fig. 1, Fig. 2)

2. Bande déchirable (10b ; 10c ; 10d) selon la revendication 1, **caractérisée en ce que** la partie médiane de la bande (13b, 13c, 13d) est dotée d'au moins deux pliures
longitudinales (4b, 5b ; 4c, 5c ; 4d, 5d) le long desquelles la bande de papier est encore une fois pliée, de sorte que la bande déchirable (10b, 10c, 10d) comporte au moins cinq épaisseurs dans sa partie médiane (13b, 13c, 13d). (Fig. 3, Fig. 4, Fig. 5)

3. Bande déchirable (10e ; 10f ; 10g) selon la revendication 2, **caractérisée en ce que** la partie médiane de la bande (13e, 13f, 13g) est munie d'autres pliures longitudinales (4e, 5e, 6e ; 4f, 5f, 6f ; 4g, 5g, 6g) le long desquelles la bande de papier (1e, 1f, 1g) est à nouveau pliée, de sore que la bande déchirable (10e, 10f, 10g) comporte au moins six épaisseurs dans sa partie médiane. (Fig. 6, Fig. 7, Fig. 8)

4. Bande déchirable (10a ; 10b ; 10c ; 10d ; 10e ; 10f ; 10g) selon l'une des revendications 1 à 3, **caractérisée en ce que** ses parties de bande repliées les unes par-dessus les autres, en particulier dans la partie médiane de la bande, sont partiellement ou entièrement collées les unes aux autres.

5. Bande déchirable (10a ; 10b ; 10c ; 10d ; 10e ; 10f ; 10g) selon l'une des revendications 1 à 4, **caractérisée en ce qu'**elle est faite d'un papier kraft.
